# EUROPÄISCHE PATENTANMELDUNG

(11) **EP 3 255 157 A1**
(43) Veröffentlichungstag der Anmeldung: **13.12.2017**
(21) Anmeldenummer: 16173648.3
(22) Anmeldetag: 09.06.2016
(51) Int. Cl.: C21B 13/00, F27B 1/21, F27D 17/00

(54) **VERFAHREN ZUR DIREKTREDUKTION MIT TROCKENER VENTGASENTSTAUBUNG**

(71) Anmelder: Primetals Technologies Austria GmbH, 4031 Linz (AT)
(72) Erfinder: Eder, Thomas, 4050 Traun (AT); Millner, Robert, 3382 Loosdorf (AT)
(74) Vertreter: Metals@Linz

(57) **Zusammenfassung**

Die Anmeldung betrifft ein Verfahren zur Direktreduktion von metalloxidhältigen Einsatzstoffen, zu metallisiertem Material durch Kontakt mit heißem Reduktionsgas in einem Reduktionsaggregat (1), wobei das Produkt der Direktreduktion aus dem Reduktionsaggregat (1) über eine Produktaustragsvorrichtung (3) ausgetragen wird, welche mit Sperrgas gespült wird, und aus der Ventgas abgezogen und nachfolgend entstaubt wird. Das Ventgas wird trocken entstaubt.

Sie betrifft auch eine Vorrichtung zur Durchführung des Verfahrens.

## Beschreibung

### Gebiet der Technik

Die Anmeldung betrifft ein Verfahren zur Direktreduktion von metalloxidhältigen, bevorzugt eisenoxidhältigen, Einsatzstoffen, zu metallisiertem Material durch Kontakt mit heißem Reduktionsgas in einem Reduktionsaggregat, wobei das Produkt der Direktreduktion aus dem Reduktionsaggregat über eine Produktaustragsvorrichtung ausgetragen wird, welche mit Sperrgas gespült wird, und aus der Ventgas abgezogen und nachfolgend entstaubt wird. Sie betrifft auch eine Vorrichtung zur Durchführung eines solchen Verfahrens.

### Stand der Technik

Um aus Metallerzen Metalle zu gewinnen, ist es notwendig, den Sauerstoffanteil in den Erzen zu erniedrigen. Ein Verfahren zur Erniedrigung des Sauerstoffanteils ist die sogenannte Direktreduktion, bei der man ein Reduktionsgas in einem Reduktionsaggregat auf das feste Metallerz einwirken lässt. Das feste Produkt der Direktreduktion wird aus dem Reduktionsaggregat ausgetragen und kann auf verschiedene Weisen weiterverarbeitet werden - beispielsweise wird es oft heiß kompaktiert, beispielsweise brikettiert, um es leichter handhabbar zu machen und seine spezifische Oberfläche zu vermindern, damit Ablauf von Rückoxidation, beispielsweise durch Reaktion mit Luftsauerstoff oder H2O - beispielsweise als Wasserdampf -, erschwert wird. Es ist aber auch bekannt, es ohne Kompaktierung in anderen Aggregaten weiterzuverarbeiten. Das Reduktionsaggregat, in dem die Direktreduktion abläuft, ist oft ein sogenannter Reduktionsschacht

Grundsätzlich ist es vorteilhaft, das Produkt zwischen Austrag aus dem Reduktionsaggregat und nachfolgenden Vorrichtungen - beispielsweise solchen, in denen die Brikettierung abläuft - vor Rückoxidation zu schützen, indem es unter bezüglich Oxidation reaktionsträgem Gas gehandhabt wird.

Besonders dann, wenn das Reduktionsgas im Reduktionsaggregat unter einem Überdruck steht, muss dafür gesorgt werden, dass beim Entnehmen des Produktes ein gleichzeitiges Entweichen des - in der Regel heißen - Reduktionsgases vermieden wird. Das geschieht beispielsweise dadurch, dass in die Vorrichtung, über die das Produkt aus dem Reduktionsaggregat ausgetragen wird, - in der Folge auch Produktaustragsvorrichtung genannt - ein sogenanntes Sperrgas - auch Seal Gas genannt - eingeführt wird. Das Seal Gas ist bezüglich Reaktion mit dem Produkt reaktionsträge oder inert und steht unter einem Druck, der etwas über Druck des Reduktionsgases liegt, um praktisch eine Barriere für das Entweichen des Reduktionsgases zu bilden.

Im Falle von Eisenerzen wird das Produkt der Direktreduktion beispielsweise Direct Reduced Iron DRI beziehungsweise HDRI Hot Direct Reduced Iron, oder sponge iron, oder Eisenschwamm genannt.

Ein Verfahren zur Direktreduktion von Metalloxiden zu metallisiertem Material durch Kontakt mit heißem Reduktionsgas, welches zumindest zum Teil durch katalytische Reformierung von Erdgas hergestellt wird, wobei die Wärme für die bei der Reformierung ablaufenden endothermen Reformierungsprozesse zumindest teilweise durch Verbrennung eines Brenngases geliefert wird, ist beispielsweise in Figur 1 der WO2011012452 beschrieben; es wird MIDREX®-Verfahren genannt. Bei einem solchen MIDREX®-Verfahren wird das Produkt über eine Produktaustragsvorrichtung aus dem unter erhöhtem Druck stehenden Reduktionsschacht ausgetragen. Die Produktaustragsvorrichtung umfasst in diesem Fall ein Austragsorgan und eine Materialfördereinrichtung, die unter einem im Vergleich zum Reduktionsschacht geringerem oder keinem Überdruck steht. Eine entsprechende Materialfördereinrichtung wird beispielsweise oft Produktaustragskammer beziehungsweise Product Discharge Chamber PDC genannt. Zur Abdichtung, das heißt zur Verhinderung des Austretens von heißem Reduktionsgas aus dem Reduktionsschacht, wird reaktionsträges Sperrgas - welches auch oft Bottom Seal Gas BSG genannt wird, da es das untere Ende des Reduktionsschachtes abdichten soll -, verwendet; das ist beispielsweise in WO2008123962 und US4188022 gezeigt. Man spricht davon, die Produktaustragsvorrichtung mit dem Sperrgas zu spülen. Bei einer MIDREX®-Anlage wird als BSG-Gas oft getrocknetes Rauchgas aus einem Reformer einer MIDREX®-Anlage verwendet, welches zu etwa 80 % aus Stickstoff und zu etwa 20% aus Kohlendioxid besteht und entsprechend bezüglich Oxidation von HDRI reaktionsträge ist.

Das BSG durchströmt die Materialsäule im Austragsorgan - im vorliegenden Beispiel ein mit HDRI gefülltes Materialaustragsrohr, auch dynamic seal leg genannt - zum Großteil vom Ort der Einbringung in Richtung PDC und zu einem geringen Teil in Richtung Reduktionsschacht. Ein Großteil des BSG strömt also in die PDC und muss aus dieser ausgeleitet werden. Beim Ausleiten aus der PDC - dann Ventgas genannt - ist es mit Staub des Produktes der Direktreduktion beladen. Je mehr Produkt der Direktreduktion als Staub mit dem PDC ausgetragen wird, desto unwirtschaftlicher wird das Direktreduktionsverfahren, da der Staub nicht oder nur mit erhöhtem Aufwand für beispielsweise Stahlherstellung genutzt werden kann.

Im Rahmen dieser Anmeldung ist mit dem Begriff Ventgas generell Sperrgas gemeint, das aus einer Produktaustragsvorrichtung abgezogen wird - nicht nur aus der PDC eines MIDREX®-Verfahrens ausgeleitetes Seal-Gas. Die Problematik der Staubfracht in Sperrgas besteht immer, wenn Sperrgas Produkt der Direktreduktion durchströmt.

Ein Entlassen von Ventgas in die Umwelt erfordert eine Entstaubung. Gegenwärtig wird eine Entstaubung meist nass durchgeführt, speziell bei der Reduktion von Eisenerzen. Eine Nassentstaubung führt dazu, dass der mit dem Ventgas ausgetragenes Produkt der Direktreduktion - beipielsweise Eisenschwamm - in ein Schlammsystem eingeht und nachfolgend entsorgt werden muss, ohne direkt für die Herstellung von Folgeprodukten - beispielweise im Fall von Eisenschwamm für die Stahlherstellung - genutzt werden zu können.

Aufgrund von zwischen heißem DRI - auch Hot Direct Reduced Iron HDRI oder heißer Eisenschwamm genannt-, und Kohlendioxid ablaufenden Reaktionen, und aufgrund von Ausgasen des heißen Eisenschwamm kann das Ventgas auch Spuren von CO Kohlenmonoxid enthalten. Entlassen des Ventgases in die Umwelt benötigt dann ausreichende Verdünnung.
Verdünnung von Ventgas ist auch notwendig, um seine Temperatur zu vermindern oder um Explosionsgrenzen für oxidierbare Bestandteile des Ventgases zu unterschreiten.

Bei einer Verdünnung mit Luft - auch Falschluft genannt - sind größere Mengen Falschluft erforderlich, was große zu entstaubende Gasmengen bedingt, weshalb die Entstaubung apparativ und energetisch aufwendig ist.

### Zusammenfassung der Erfindung

### Technische Aufgabe

Es ist die Aufgabe der vorliegenden Anmeldung, ein Verfahren sowie eine Vorrichtung bereitzustellen, die eine einfache Nutzung des mit Ventgas ausgetragenen Produktes der Direktreduktion für die Herstellung von Folgeprodukten ermöglicht. Weiterhin soll der mit Entstaubung des Ventgases und seiner Entlassung in die Umwelt verbundener Aufwand vermindert werden. Speziell soll einfache Nutzung von mit dem Ventgas aus der PDC eines MIDREX®-Verfahrens ausgetragenem Eisenschwamm als Eisenschwamm-Produkt beziehungsweise in einer nachfolgenden Stahlherstellung aus dem Eisenschwamm ermöglicht werden.

### Technische Lösung

Diese Aufgabe wird gelöst durch ein
Verfahren zur Direktreduktion von metalloxidhältigen, bevorzugt eisenoxidhältigen, Einsatzstoffen, zu metallisiertem Material durch Kontakt mit heißem Reduktionsgas in einem Reduktionsaggregat,
wobei das Produkt der Direktreduktion aus dem Reduktionsaggregat über eine Produktaustragsvorrichtung ausgetragen wird, welche mit Sperrgas gespült wird, und aus der Ventgas abgezogen und nachfolgend entstaubt wird,
dadurch gekennzeichnet, dass das Ventgas trocken entstaubt wird.

Das Ventgas wird bevorzugt nur trocken entstaubt und bis zur Entlassung in die Umwelt nicht nass entstaubt.

### Vorteilhafte Wirkungen der Erfindung

Bevorzugterweise handelt es sich bei den Metalloxiden um Eisenoxide. Weiters können aber auch, gemäß Richardson-Jeffes-Diagramm, beispielsweise oxidische Erze von Nickel, Kupfer, Blei, Kobalt, reduziert werden.

Das Verfahren zur Direktreduktion kann beispielsweise ein Verfahren nach dem Typ MIDREX® mit katalytischer Reformierung von Kohlenwasserstoffen zur Herstellung eines Reduktionsgases, wobei das Reduktionsgas zumindest zum Teil durch katalytische Reformierung eines Gemisches von gasförmigen Kohlenwasserstoffen hergestellt wird, wobei die Wärme für die bei der Reformierung ablaufenden endothermen Reformierungsprozesse zumindest teilweise durch Verbrennung eines Brenngases geliefert wird, sein - wie beispielsweise in WO2011012448 und WO2011012452 beschrieben, deren gesamte Offenbarung, speziell hinsichtlich der Reformierung, von der vorliegenden Anmeldung mit umfasst wird. Es kann aber auch beispielsweise ein Direktreduktionsverfahren auf Basis einer Kohlevergasung oder einer Schmelzreduktionsanlage sein, beispielsweise in einem COREX®-DR-Verbund. In diesen Fällen könnte beispielsweise Sealgas aus dem Reduktionsgasofen zur Aufheizung des Reduktionsgases gewonnen werden, da im Vergleich zum MIDREX®-Verfahren ein entsprechender Reformer als Quelle nicht vorhanden ist.

Das Produkt der Direktreduktion von eisenoxid-hältigen Einsatzstoffen, DRI oder HDRI, wird bevorzugt heiß brikettiert, beispielsweise zu hot briquetted iron HBI verarbeitet. Es kann aber auch im heißen Zustand aus dem Reduktionsschacht ausgetragen und direkt im Stahlwerk genutzt werden, beispielsweise durch Zugabe in heißem Zustand in einen Elektrolichtbogenofen.
Der Metallisierungsgrad ist das Verhältnis zwischen metallischem Eisen und Gesamteisen im HBI; er ist bei HBI ≥ 88%. Laut aktuellen International Maritime Organization IMO Vorschriften ist die
Dichte von HBI ≥ 5 kg/dm³. Die Dichte des heiß brikettierten Brikettierungsproduktes kann auch unter dieser Dichte liegen, beispielsweise falls aus bestimmten Rohstoffen oder für besondere Zwecke hergestellt wird.
Bei der heißen Brikettierung kann direkt ein Brikett hergestellt werden, oder es können Stränge - auch Schülpen genannt - hergestellt werden, die entweder selber brechen oder mittels Brecher in kleinere Stücke gebrochen werden.

Zu den Vorrichtungen, in denen die Brikettierung abläuft, wird der Eisenschwamm aus dem Reduktionsaggregat beispielsweise über eine Produktaustragskammer PDC geliefert. Wie in den entsprechenden voranstehenden Passagen der Einleitung zum Stand der Technik erläutert, wird die Produktaustragsvorrichtung mit Sperrgas beaufschlagt; das heißt, Sperrgas wird in die Produktaustragsvorrichtung eingeleitet, und Ventgas wird aus der Produktaustragsvorrichtung abgezogen. Wenn in der Produktaustragsvorrichtung keinerlei Änderung in der Zusammensetzung des Sperrgases erfolgt, entspricht die Zusammensetzung des Ventgases dem Sperrgas. Das Ventgas ist im Vergleich zu dem eingeleiteten Sperrgas stärker mit Staub des Produktes beladen.

Das Ventgas wird erfindungsgemäß trocken entstaubt.
Auf diese Weise kann auf die mit einer Nassentstaubung verbundene Wasserwirtschaft und Schlammentsorgung verzichtet werden. Außerdem wird das als Staub im Ventgas aus der Produktaustragsvorrichtung, beispielsweise aus einer PDC, ausgetragene Produkte der Direktreduktion, beispielsweise Eisenschwamm, trocken abgeschieden und kann daher einfach genutzt werden. Die Trockenentstaubung kann einstufig oder mehrstufig, beispielsweise zweistufig erfolgen. Bei einer einstufigen Trockenentstaubung kann beispielsweise lediglich mittels Filtern entstaubt werden; bei einer zweistufigen Trockenentstaubung kann beispielsweise zuerst mittels Zyklon oder Grobheißfilter grob entstaubt werden und nachfolgend mittels Trockenfiltern feiner entstaubt werden. Aufgrund der Temperaturen des Ventgases sind Heißgasfilter, beispielsweise aus keramischen Materialien, bevorzugt. Die Trockenfilter weisen bevorzugt einen geringen Druckverlust auf. Nutzung erfolgt im Fall der Direktreduktion von Eisenerz als Eisenschwamm-Produkt beziehungsweise in einer nachfolgenden Stahlherstellung aus dem Eisenschwamm.
Beispielsweise kann der bei der Trockenentstaubung abgeschiedene Eisenschwamm- bevorzugt ein mittels Grobheißfilter oder Zyklon abgeschiedener grober Eisenschwamm - wieder in die Materialfördereinrichtung, beispielsweise in eine PDC, eingegeben werden - beispielsweise durch Schwerkraftwirkung, wenn die Trockenentstaubung oberhalb der PDC erfolgt.
Beispielsweise kann der bei der Trockenentstaubung abgeschiedene Staub - beispielsweise Eisenschwamm - Vorrichtungen, in denen Brikettierung abläuft, zugeführt werden. Speziell für eine Brikettierung ist die Verwendung des Staubes aus dem Ventgas vorteilhaft, da dieser Staub in der Regel eine Korngröße bis maximal 3 mm aufweist. Ein solcher Staub führt bei Brikettierung zu Briketts hoher Qualität, beispielsweise mit hoher Dichte, die sich besonders wirtschaftlich weiterverwenden lassen. Der bei der Trockenentstaubung abgeschiedene Staub kann auch einem Recycling von bei der Brikettierung anfallenden Fines - die beispielsweise < 6 mm sind - zugegeben werden.
Der bei der Trockenentstaubung abgeschiedene Staub - beispielsweise Eisenschwamm - kann auch wieder in das Reduktionsaggregat als metalloxid-hältiger Einsatzstoff eingegeben werden.
Bei der Trockenentstaubung abgeschiedener Eisenschwamm kann auch als HDRI - denn bei der Trockenentstaubung wird er ja im Gegensatz zu einer Naßentstaubung nicht abgekühlt - entsprechenden Verbrauchern in einem Stahlwerk zugeführt werden.

Das trocken entstaubte Ventgas ist von seiner Staubfracht weitgehend befreit, und ist immer noch heiß - es hat bei einem MIDREX®-Verfahren, bei dem BSG beispielsweise mit 20-80°C zugeführt wird, und staubiges Ventgas aus einer PDC circa 250-750°C aufweist - circa 250°-750°C. Falschluft wird nicht zugeführt. Ventgas aus einer Nassentstaubung hat circa 30-100°C.
Im Vergleich zu herkömmlicher Nassentstaubung sind auch wesentlich kleinere Gasmengen zu handhaben, weil bei der erfindungsgemäßen Trockenentstaubung vor dem Entstaubungsschritt keine Verdünnung mit Falschluft erfolgt; bei einem herkömmlichen Verfahren im Anschluss an eine MIDREX®-Direktreduktion wird das staubbeladene Ventgas auf das etwa 10-30fache Volumen verdünnt.

Aufgrund der vergleichsweise hohen Temperatur und der geringen Gasmenge kann das entstaubte Ventgas einfach von unerwünschten gasförmigen Bestandteilen, wie beispielsweise CO, befreit werden. Vorteilhafterweise wird also der Gehalt zumindest eines gasförmigen Bestandteils des entstaubten Ventgases vermindert.

Dabei ist auch mitumfasst, den Bestandteil völlig zu entfernen. Beispielsweise hinsichtlich des gasförmigen Bestandteiles Kohlenmonoxid CO durch Umwandlung in CO2
- durch katalytische Umsetzung mit Sauerstoff 02 und/oder H20 als Wasserdampf,
   und/oder
- durch Verbrennung.Derartige Umsetzungen laufen beispielsweise für CO und Sauerstoff bei 200-800°C optimal ab. Konkret Oxidation durch Verbrennung bei circa 600-800°C, und katalytische Umsetzung bei Temperaturen ab 200°C.

Um für die Umwandlung in CO2 optimale Bedingungen beispielsweise bezüglich Temperatur oder Sauerstoffgehalt oder Wasserdampfgehalt zu schaffen, können beispielsweise Stickstoff, Luft oder andere sauerstoffhaltige und/oder wasserdampfhaltige Gase zugeführt werden. Es können auch bei dem Direktreduktionsverfahren anfallende Gase genutzt werden - beispielsweise bei einem MIDREX®-Verfahren anfallende Gase Wet Seal Gas, Dry Seal Gas, Purge Gas oder Bottom Seal gas, welche sich beispielsweise durch Wasserdampfgehalt und Druckniveau unterscheiden.
Nach einer solchen Befreiung von unerwünschten Bestandteilen kann das Ventgas unproblematisch in die Umwelt entlassen werden, ohne weiter verdünnt werden zu müssen.

Ein weiterer Gegenstand des Verfahrens ist eine Vorrichtung zur Durchführung eines erfindungsgemäßen Verfahrens, dadurch gekennzeichnet, dass sie umfasst
- ein Reduktionsaggregat mit einer Reduktionsgaszuführung,
- eine Produktaustragsvorrichtung,
- eine in die Produktaustragsvorrichtung mündende Sperrgaszufuhrleitung,
- eine von der Produktaustragsvorrichtung ausgehende Ventgasableitung,
dadurch gekennzeichnet, dass
die Ventgasableitung in eine Trockenentstaubungsvorrichtung mündet, von der eine Ausleitvorrichtung zum Ausleiten von trocken entstaubtem Ventgas in die Atmosphäre ausgeht.

Das Reduktionsaggregat ist beispielsweise ein Reduktionsschacht, bei dem Rohmaterial oben eingegeben wird und unten Produkt ausgetragen wird; beim Durchlaufen des Schachtes der Schwerkraft folgend von oben nach unten wird mittels Reduktionsgas reduziert. Ein solcher Reduktionsschacht wird beispielsweise bei einem MIDREX®-Verfahren mit Reduktionsgas unter einem Druck von 0,03 - 0,3 MPa_{g} betrieben; Überdruck im Vergleich zum Atmosphärendruck der Umgebung.

Die Produktaustragsvorrichtung umfasst beispielsweise ein Austragsorgan und eine Materialfördereinrichtung. Dabei kann es sich beispielsweise um ein Materialaustragsrohr mit Anschluss einer Sperrgaszufuhrleitung, und beispielsweise um einen Zellenradförderer handeln.
Im Fall eines MIDREX®-Verfahrens steht die Materialfördereinrichtung unter einem im Vergleich zum Reduktionsschacht geringerem oder keinem Überdruck im Vergleich zum Atmosphärendruck der Umgebung. Wie bereits in der Einleitung beschrieben, wird eine entsprechende Materialfördereinrichtung bei einem MIDREX®-Verfahren meist Produktaustragskammer beziehungsweise Product Discharge Chamber PDC genannt. Ein Austragsorgan wird im Zusammenhang mit MIDREX®-Verfahren oft dynamic seal leg - siehe WO2008123962 - oder dynamische Gassperre genannt.

Die Ventgasableitung kann beispielsweise von der PDC ausgehen.

Die Ventgasableitung mündet in eine Trockenentstaubungsvorrichtung, die beispielsweise mit keramischen Filterkerzen bestückt ist. Die Filterkerzen können auch aus CaSi-Fasern oder AlSi oder asbestähnlichem Material bestehen. Die Trockenentstaubungsvorrichtung kann auch einen Zyklon zur Grobentstaubung und keramische Filterkerzen zur Feinentstaubung umfassen.

Trockener Staub des Produktes, beispielsweise Staub von Eisenschwamm, kann beispielsweise wieder in die PDC eingebracht werden, oder es können Brikettierpressen beziehungsweise mit diesen verbundene Materialbunker versorgt werden, oder es kann in das Reduktionsaggregat eingebracht werden.

Von der Trockenentstaubungsvorrichtung geht eine Ausleitvorrichtung zum Ausleiten von trocken entstaubtem Ventgas in die Atmosphäre aus. Vorzugsweise umfasst diese Ausleitvorrichtung eine Vorrichtung zum Vermindern des Gehalt zumindest eines gasförmigen Bestandteils des entstaubten Ventgases. So können gegebenenfalls ungewünschte Emissionen vermindert werden.

Nach einer bevorzugten Variante ist die Vorrichtung zum Vermindern des Gehalt zumindest eines gasförmigen Bestandteils des entstaubten Ventgases eine Vorrichtung zur Verminderung des Gehalts an CO durch
- katalytische Umsetzung zu CO2 mit Sauerstoff 02 und/oder H2O als Wasserdampf,
   und/oder
- durch Verbrennung zu CO2.
Es handelt sich also beispielsweise um Brennersysteme. Es handelt sich also beispielsweise um Katalysatoren auf Edelmetallbasis wie Platin, Platin/Eisen, Platin/Ruthenium, Platin/Palladium.

Vorzugsweise weist die Vorrichtung zur Verminderung des Gehalts an CO zumindest eine Zufuhrleitung zur Zufuhr von sauerstoffhaltigen und/oder wasserdampfhaltigen Gasen auf.

Im Vergleich zu herkömmlicher Verfahrensführung mit Naßentstaubung ist das erfindungsgemäße Verfahren produktiver, da das mit Ventgas ausgetragene Produkt nicht als Schlamm für die Produktion des Metallproduktes weitgehend verlorengeht, sondern als trockener Staub einfach genutzt werden kann. Abwasseraufbereitung einer Naßentstaubung entfällt, wodurch der apparative Aufwand, Investitionskosten und Betriebskosten vermindert werden. Entlassung entstaubten Ventgases in die Umwelt ist mit weniger Aufwand möglich und kann einfach bei vermindertem Gehalt unerwünschter Bestandteile erfolgen.
Das erfindungsgemäße Verfahren lässt sich einfach in bestehende Anlagen nachrüsten.

### Kurze Beschreibung der Zeichnungen

Anhand der folgenden schematischen beispielhaften Figuren wird die vorliegende Erfindung anhand von schematisch dargestellten beispielhaften Ausführungsformen erläutert.
Figur 1 zeigt eine Ausführungsform einer erfindungsgemäßen Vorrichtung.
Figur 2 zeigt eine andere Ausführungsform einer erfindungsgemäßen Vorrichtung, in der ein MIDREX®-Verfahren durchgeführt wird.

### Beschreibung der Ausführungsformen

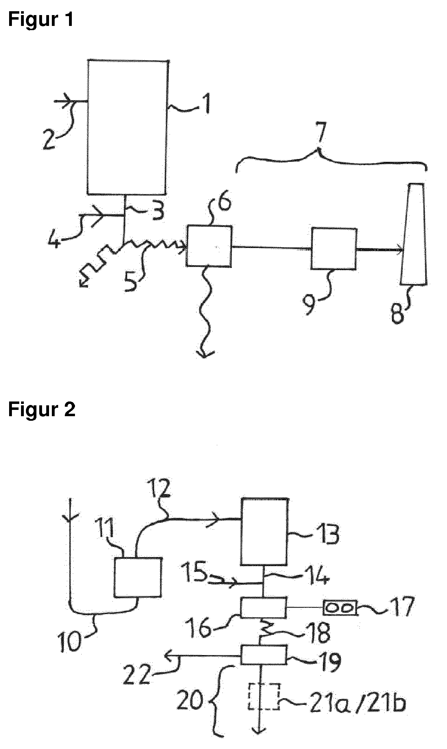

Figur 1 zeigt eine Vorrichtung zur Durchführung eines erfindungsgemäßen Verfahrens. Sie umfasst ein Reduktionsaggregat 1 mit einer Reduktionsgaszuführung 2, durch die heißes Reduktionsgas in das Reduktionsaggregat geleitet wird. Auf die Darstellung der Einbringung von metalloxid-hältigen Einsatzstoffen als Rohmaterial in das Reduktionsaggregat wurde zur besseren Übersichtlichkeit verzichtet. Vom Reduktionsaggregat 1 geht eine Produktaustragsvorrichtung 3 aus, mit der das Produkt der Direktreduktion aus dem Reduktionsaggregat 1 ausgetragen wird. In die Produktaustragsvorrichtung 3 mündet eine Sperrgaszufuhrleitung 4, durch die Sperrgas in die Produktaustragsvorrichtung eingeleitet wird, um sie mit Sperrgas zu spülen. Von der Produktaustragsvorrichtung 3 geht eine Ventgasableitung 5 aus; dargestellt mit gezacktem Pfeil. Ventgas aus der Produktaustragsvorrichtung 3 wird durch die Ventgasableitung 5 ausgeführt. Wenn die Produktaustragsvorrichtung beispielsweise ein Austragsorgan und eine Materialfördervorrichtung umfasst - was hier nicht extra dargestellt ist - kann in das Austragsorgan Sperrgas eingeführt werden, welches zum Teil in die Materialfördervorrichtung strömt und aus dieser als Ventgas ausgeführt werden. Die Materialfördereinrichtung könnte beispielsweise ein Zellenradförderer sein oder ein Wischerarm - auf Englisch wiper bar. Ausgetragenes Produkt ist durch einen eckigen Pfeil angedeutet. Die Ventgasableitung 5 mündet in eine Trockenentstaubungsvorrichtung 6, in der das Ventgas trocken entstaubt wird. Austrag von trockenem Staub, beispielsweise zu in der Beschreibung genannten Verbrauchern, ist durch einen gewellten Pfeil dargestellt. Von der Trockenentstaubungsvorrichtung 6 geht eine Ausleitvorrichtung 7 zum Ausleiten von trocken entstaubtem Ventgas in die Atmosphäre aus; schematisch dargestellt durch eine in einen Kamin 8 führende Leitung. Die Ausleitvorrichtung 7 umfasst eine Vorrichtung 9 zum Vermindern des Gehalts zumindest eines gasförmigen Bestandteils des entstaubten Ventgases. Im dargestellten Fall ist die Vorrichtung 9 eine Vorrichtung zur Verminderung des Gehalts an CO durch Oxidation via katalytischer Umsetzung mit Sauerstoff 02 oder H2O als Wasserdampf. Sie könnte auch eine Vorrichtung zur Verminderung des Gehalts an CO durch Verbrennung sein, also ein Brennersystem.

Figur 2 zeigt eine Ausführungsform, in der ein MIDREX®-Verfahren durchgeführt wird. Erdgas 10 wird in einen Reformer 11 geleitet und dort zu Reduktionsgas umgesetzt. Heißes Reduktionsgas wird über die Reduktionsgaszuführung 12 in den Reduktionsschacht 13 eingeleitet. Auf die Darstellung von Rezyklierung von Topgas des Reduktionsschachtes wurde zur besseren Übersichtlichkeit verzichtet. Die Produktaustragsvorrichtung zum Austragen von HDRI aus dem Reduktionsschacht 13 umfasst ein dynamic seal leg 14 als Austragsorgan, in welches eine Sperrgaszufuhrleitung 15 mündet, sowie eine PDC 16. Das über die Sperrgaszufuhrleitung zugeführte Sperrgas dichtet den Reduktionsschacht 13 bezüglich Durchbruch von Reduktionsgas ab und spült das dynamic seal leg 14 sowie die PDC 16. Von der Produktaustragsvorrichtung, im dargestellten Beispiel aus ihrer PDC 16, wird HDRI einer Brikettierungsanlage 17 zugeführt. Von der Produktaustragsvorrichtung, im dargestellten Beispiel aus ihrer PDC 16, geht eine Ventgasableitung 18 aus, die in eine Trockenentstaubungsvorrichtung 19 mündet. Von dieser Trockenentstaubungsvorrichtung 19, die mit keramischen Filterkerzen ausgestattet sein kann, wird entstaubtes Ventgas über die Ausleitvorrichtung 20 in die Umwelt entlassen. Optional kann sie auch einen Zyklon vor den keramischen Filterkerzen umfassen, was zur besseren Übersichtlichkeit nicht extra dargestellt ist. Durch Strichlierung als optional angedeutet ist in der Ausleitvorrichtung 20 eine Vorrichtung zur Verminderung des Gehaltes an CO im entstaubten Ventgas durch katalytische Umsetzung mit Sauerstoff 21a und/oder ein Brennersystem 21b vorhanden. Trockener Staub aus der Trockenentstaubungsvorrichtung 19 kann über Staubaustragsleitung 22 verschiedenen Zielen zugeführt werden.

In Figur 1 und Figur 2 kann die Vorrichtung zur Verminderung des Gehalts an CO auch Zufuhrleitung zur Zufuhr von sauerstoffhaltigen und/oder wasserdampfhaltigen Gasen aufweisen; das ist zur besseren Übersichtlichkeit jedoch nicht extra dargestellt.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen".

Die Offenbarung der vorliegenden Anmeldung umfasst auch die gesamte Offenbarung der WO08123962, US4188022, WO2011012448, WO2011012452.

### Liste der Anführungen

### Patentliteratur

WO2011012452
WO2008123962
US4188022
WO2011012448

### Bezugszeichenliste

- 1: Reduktionsaggregat
- 2: Reduktionsgaszuführung
- 3: Produktaustragsvorrichtung
- 4: Sperrgaszufuhrleitung
- 5: Ventgasableitung
- 6: Trockenentstaubungsvorrichtung
- 7: Ausleitvorrichtung
- 8: Kamin
- 9: Vorrichtung zum Vermindern des Gehalts zumindest eines gasförmigen Bestandteils des entstaubten Ventgases
- 10: Erdgas
- 11: Reformer
- 12: Reduktionsgaszuführung
- 13: Reduktionsschacht
- 14: Dynamic seal leg
- 15: Sperrgaszufuhrleitung
- 16: PDC Product discharge chamber
- 17: Brikettierungsanlage
- 18: Ventgasleitung
- 19: Trockenentstaubungsvorrichtung
- 20: Ausleitvorrichtung
- 21a: Vorrichtung zur Verminderung des Gehaltes an CO im entstaubten Ventgas durch katalytische Umsetzung mit Sauerstoff
- 21b: Brennersystem
- 22: Staubaustragsleitung

## Patentansprüche

1. Verfahren zur Direktreduktion von metalloxidhältigen, bevorzugt eisenoxidhältigen, Einsatzstoffen, zu metallisiertem Material durch Kontakt mit heißem Reduktionsgas in einem Reduktionsaggregat (1),
wobei das Produkt der Direktreduktion aus dem Reduktionsaggregat (1) über eine Produktaustragsvorrichtung (3) ausgetragen wird, welche mit Sperrgas gespült wird, und aus der Ventgas abgezogen und nachfolgend entstaubt wird,
**dadurch gekennzeichnet, dass** das Ventgas trocken entstaubt wird.

2. Verfahren nach Anspruch 1, **dadurch gekennzeichnet, dass** das der Gehalt zumindest eines gasförmigen Bestandteils des entstaubten Ventgases vermindert wird.

3. Verfahren nach Anspruch 2, **dadurch gekennzeichnet, dass** der gasförmige Bestandteil Kohlenmonoxid CO ist, und sein Gehalt durch Umwandlung in CO2
- durch katalytische Umsetzung mit Sauerstoff 02 und/oder H20 als Wasserdampf,
und/oder
- durch Verbrennung,
vermindert wird.

4. Verfahren nach Anspruch 3, **dadurch gekennzeichnet, dass** für die Umwandlung in CO2 sauerstoffhaltige und/oder wasserdampfhaltige Gase zugeführt werden.

5. Vorrichtung zur Durchführung eines Verfahrens nach einem der Ansprüche 1-4, **dadurch gekennzeichnet, dass** sie umfasst
- ein Reduktionsaggregat (1) mit einer Reduktionsgaszuführung (2),
- eine Produktaustragsvorrichtung (3),
- eine in die Produktaustragsvorrichtung (3) mündende Sperrgaszufuhrleitung (4),
- eine von der Produktaustragsvorrichtung (3) ausgehende Ventgasableitung(5),
**dadurch gekennzeichnet, dass**
die Ventgasableitung (5) in eine Trockenentstaubungsvorrichtung (6) mündet, von der eine Ausleitvorrichtung (7) zum Ausleiten von trocken entstaubtem Ventgas in die Atmosphäre ausgeht.

6. Vorrichtung nach Anspruch 5, **dadurch gekennzeichnet, dass** die Ausleitvorrichtung (7) eine Vorrichtung (9) zum Vermindern des Gehalt zumindest eines gasförmigen Bestandteils des entstaubten Ventgases umfasst.

7. Vorrichtung nach Anspruch 6, **dadurch gekennzeichnet, dass**
die Vorrichtung (9) zum Vermindern des Gehalt zumindest eines gasförmigen Bestandteils des entstaubten Ventgases
eine Vorrichtung zur Verminderung des Gehalts an CO durch
- katalytische Umsetzung zu CO2 mit Sauerstoff 02 und/oder H2O als Wasserdampf,
und/oder
- durch Verbrennung zu CO2
ist.

8. Vorrichtung nach Anspruch 7, **dadurch gekennzeichnet, dass** die Vorrichtung zur Verminderung des Gehalts an CO zumindest eine Zufuhrleitung zur Zufuhr von sauerstoffhaltigen und/oder wasserdampfhaltigen Gasen aufweist.
